# EUROPÄISCHE PATENTSCHRIFT

(11) **EP 0 878 036 B1**
(45) Veröffentlichungstag und Bekanntmachung des Hinweises auf die Patenterteilung: **28.04.2004**
(21) Anmeldenummer: 97943762.1
(22) Anmeldetag: 11.09.1997
(51) Int. Cl.: H01R 12/16, F01N 9/00

(54) **KONSTRUKTION EINES LAMBDA-MODULS MIT GEGENSTECKER**
LAMBDA MODULE CONSTRUCTION WITH A COUNTER PLUG
CONSTRUCTION D'UN MODULE LAMBDA A CONTRE-FICHE

(30) Priorität: 11.09.1996 DE 29615862 U
(43) Veröffentlichungstag der Anmeldung: 18.11.1998
(73) Patentinhaber: Augat Components GmbH, Division of Thomas & Betts, 63329 Egelsbach (DE)
(72) Erfinder: MÖRSDORF, Tabitha, D-87778 Stetten (DE); SCHIMANSKY, Dirk, D-53225 Bonn (DE)
(74) Vertreter: Gallo, Wolfgang, Dipl.-Ing. (FH)
(86) Internationale Anmeldenummer: PCT/DE1997/002047
(87) Internationale Veröffentlichungsnummer: WO 1998/011632

(56) Entgegenhaltungen:
- EP-A- 0 120 423
- EP-A- 0 613 216
- DE-A- 4 235 181

## Beschreibung

Gegenstand der Erfindung ist ein Lambda-Modul mit Gegenstekker für Lambda-Sonden von Katalysatoren.

Lambda-Module sind beispiels weise aus der EP-A-0 120 423, EP-A-0 613 216 und DE 42 35 181 A1 bekannt.

Ein weiteres Lambda-Modul besteht bekanntermaßen aus einem Gehäuse, in welchem ein elektronischer Hybridbaustein mit den zugehörigen elektrischen Anschlüssen untergebracht ist. An dem Gehäuse ist eine Steckkupplung angeformt, in welche der an einem Anschlußkabel montierte Gegenstecker einsteckbar und verriegelbar ist.

Aufgabe der Erfindung ist es, eine Konstruktion eines solchen Lambda-Moduls in besonders zweckmäßiger und montagefreundlicher Weise insbesondere im Hinblick auf die Halterung des Hybridbaustein zu schaffen. Bei bisherigen Konstruktionen ist nämlich das Einlöten der Kontakte an den Hybridbaustein sowie der durchzuführende notwendige Abgleich problematisch.

Diese Aufgabe wird erfindungsgemäß durch die in den Schutzansprüchen angegebene Konstruktion gelöst.

Ein Ausführungsbeispiel der Erfindung wird nachstehend unter Bezugnahme auf die anliegenden Zeichnungen mehr im einzelnen beschrieben, in welchen zeigt:
- Fig. 1: Den Lambda-Modul samt Gegenstekker in auseinandergezogener perspektivischer Darstellung, und
- Fig. 2: den Lambda-Modul mit angekuppeltem Gegenstecker (jedoch Kabel nicht dargestellt) ebenfalls in perspektivischer Darstellung, jedoch zusammengebaut und aus anderer Blickrichtung.

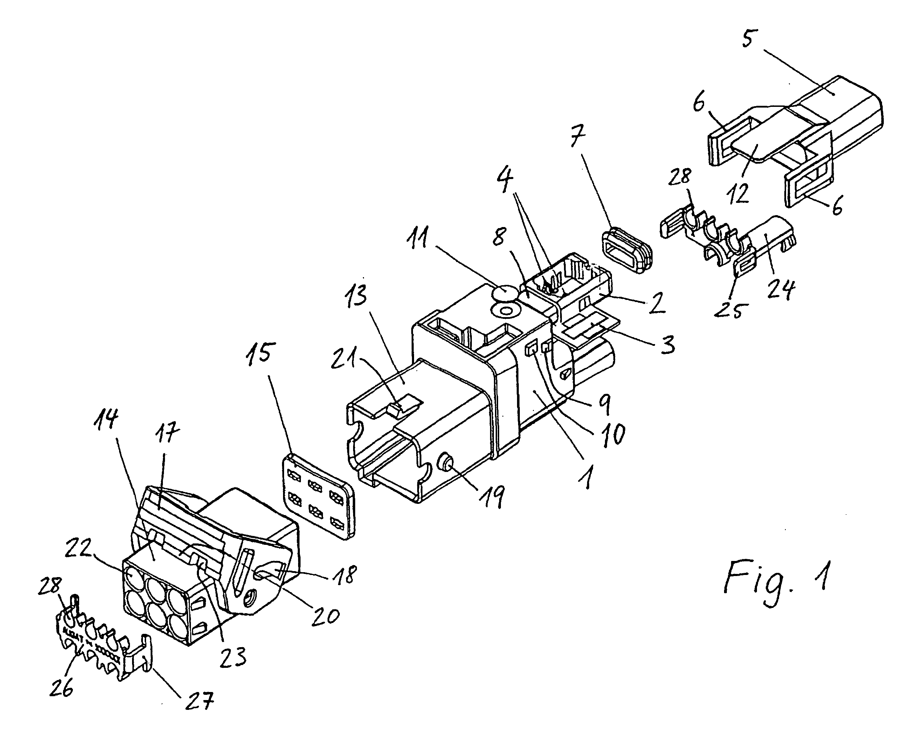

Zunächst wird auf Fig. 1 Bezug genommen.

Der Lambda-Modul besteht zunächst aus einem Modulgehäuse 1 mit einem angeformtem Bausteinträger 2 für einen Hybridbaustein 3. Der plättchenförmige Hybridbaustein 3, der zum Laserabgleich dient, ist bei dem dargestellten Ausführungsbeispiel von unten in dem Bausteinträger einsetzbar und mittels dort angeformter Restnasen einrastbar. In der vom Bausteinträger 2 umschlossenen Kammer befinden sich zwei in das Modulgehäuse 1 eingespritzte Kontakte 4, die nach dem Einsetzen des Hybridbausteins 3 auf diesem aufgelötet werden.

Der Bausteinträger 3 ist in Form eines offenen Rahmens ausgebildet und umschließt somit einen oben und untenen offenen Raum. Dieser Rahmen kann, wie dargestellt, als Rechteckrahmen ausgebildet sein, er könnte aber auch lediglich eine Gabeloder U-Form haben. Im letzteren Fall (nicht dargestellt) könnte das Hybridbaustein-Plättchen auch nach Art einer Schublade seitwärts eingeschoben werden, etwa in entsprechende Führungsnuten.

Die den Hybridbaustein 3 nur an dessen Umfang umgreifende Rahmenform des Bausteinträgers 2 ermöglicht den freien Zugang des Hybridbausteins 3 zum Laserabgleich und zum Einlöten der Kontakte.

Um die Kontakte 4 und den Hybridbaustein 3 vor Wasser, Öl, Schmutz und anderen Verunreinigungen zu schützen, ist eine Kappe 5 vorgesehen, die nach erfolgtem Abgleich des Hybridbausteins und nach Einlöten der Kontakte über den Bausteinträger 2 aufschiebbar ist und mit seitlichen Rastarmen 6 über entsprechende, am Modulgehäuse 1 angeformte Rastnasen rastet. Eine ringförmige Dichtung 7 wird zuvor auf den Hals 8 zwischen den Bausteinträger 2 und den übrigen Teil des Modulgehäuses 1 montiert und dichtet dann das vordere Ende der aufgesetzten Kappe 5 ab.

Zum Verrasten der Kappe 5 sind am Modulgehäuse 1 ein erstes Paar Rastnasen 9 zur Vorverrastung und ein zweites Paar Rastnasen 10 zur Endverrastung gebildet.

Um einen Druckausgleich in der bei aufgesetzter Kappe hermetisch abgeschlossenen Hybridbausteinkammer zu gewährleisten, ist im Modulgehäuse 1 eine Aussparung vorgesehen, auf die eine Druckausgleichsmembran 11 geklebt ist. Diese Druckausgleichsmembran 11 wird bei aufgesetzter Kappe 5 von einer daran oben vorspringend angeformten Abdeckzunge 12 abgedeckt und so vor mechanischer Beschädigung und vor Verunreinigung geschützt.

An dem mit Bezug auf den Bausteinträger 2 anderen Seite des Modulgehäuses 1 ist eine Steckeraufnahme 13 angeformt. Diese dient zur Aufnahme eines Gegensteckers 14 unter Zwischenlegung eines Dichtkissens 15. Eine mechanische Kodierung 16 an der Steckeraufnahme und (in Fig. 1 nicht sichtbar) am Gegenstecker 14 verhindert ein Einstecken des Gegensteckers mit falscher Orientierung.

Zur Fixierung und Sicherung des Gegensteckers 14 in der Steckeraufnahme 13 ist am Gegenstecker ein schwenkbarer Spannbügel 17 angebracht. Dieser greift mit beiderseits angeordneten Kulissen 18 über beiderseits an der Steckeraufnahme 13 angeordnete Zapfen 19. Beim Schwenken des Spannbügels wird also durch das Zusammenwirken der Kulissen 18 mit den Zapfen 19 der Gegenstecker 14 vollständig in die Steckeraufnahme 13 hineingezogen. Der Endabschnitt der Kulissen 18 ist so geformt, daß sich eine stabile Rastposition als Endstellung ergibt. Gleichzeitig rastet dann der Mittelsteg des Spannbügels 17 mit seinem Hinterkantenbereich 20 über eine federnde Rastnase 21 an der Steckeraufnahme 13.

Der Gegenstecker ist, wie aus Fig. 1 sichtbar ist, in seinem Inneren wabenartig ausgebildet, d.h. jedem Pol ist eine rohrartige Kammer 22 zugeordnet, wobei diese Kammern durch Trennwände voneinander getrennt sind. Durch diese Wabenkonstruktion wird im Zusammenwirken mit dem Dichtkissen 15 Wasserdichtigkeit zwischen dem Modulgehäuse 1 und den Gegenstecker 14 von Kammer zu Kammer erzielt.

Der Spannbügel 17 des Gegensteckers weist im Hinterkantenbereich seines Mittelstegs zwei angeformte elastische Rasten 23 auf, die bei, wie dargestellt, zurückgeschwenktem Spannbügel hinter zwei am Gegenstecker 14 angeformten, in Fig. 1 verdeckten, also nicht sichtbaren Rastnasen einrasten können. Damit ist der Spannbügel 17 in seiner Offenstellung am Gegenstecker 14 verriegelbar, so daß er auch beim Versand (als Schüttgut) nicht seine Position verliert und die Handhabung bei der Montage vereinfacht.

Zur Sicherung der (unterhalb des Bausteinträgers 2) in das Modulgehäuse 1 eingeführten Kabelkontakte wird nach deren Montage ein Sekundärverriegelungselement 24 auf das Modulgehäuse 1 aufgeclipst. Dazu hat die Sekundärverriegelung 24 beiderseits Rastarme 25, die mit entsprechenden, am Modulgehäuse 1 angeformten Rastnasen zusammenwirken.

In entsprechender Weise ist zur Sicherung der Anschlußkabelkontakte im Gegenstecker 14 ein Sekundärverriegelungselement 26 vorgesehen, das nach Montage der Kabelkontakte im Gegenstecker rückseitig auf diesen aufgeclipst wird und dazu beiderseits Rastarme 27 aufweist, die mit entsprechenden Rastnasen am Gegenstecker 14 zusammenwirken. Die Sekundärverriegelungselemente sind jeweils, wie ersichtlich, mit die Kabel zangenartig umgreifenden, vorzentrierenden Führungselementen 28 ausgebildet.

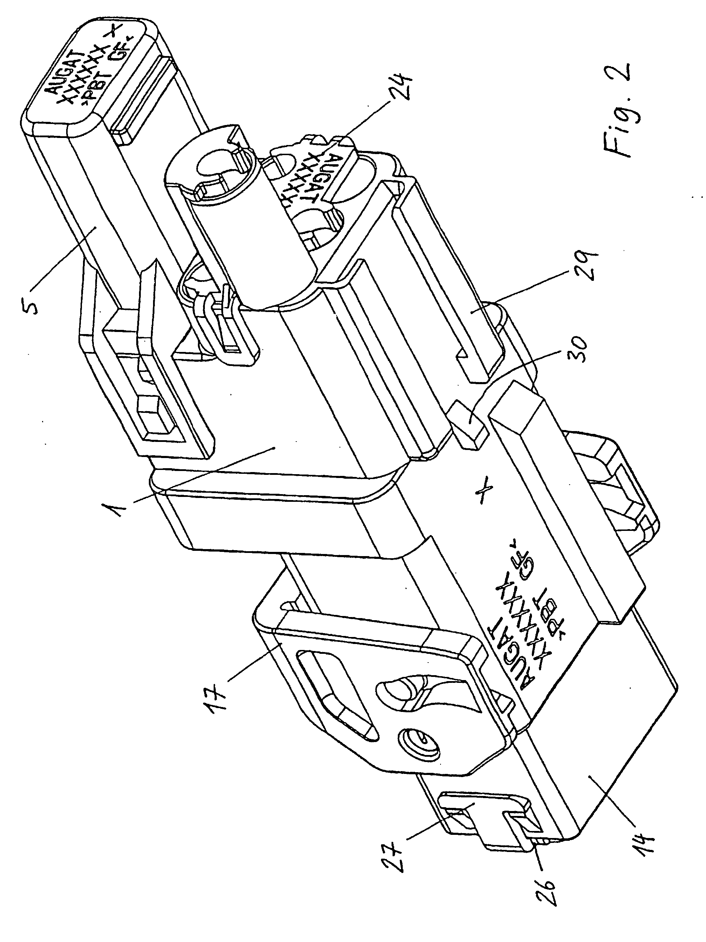

In Fig. 2, in welcher der Lambda-Modul mit aufgesteckter Kappe 5 und verrastetem Gegenstecker 14 dargestellt ist, ist auch eine unten am Modulgehäuse 1 angeordnete Schwalbenschwanzaufnahme 29 und eine Rastnase 30 zur Montage des Lambda-Moduls an einer Standard-Haltevorrichtung sichtbar.

## Patentansprüche

1. Lambda-Modul für Kraftfahrzeug-Katalysatoren, mit einem Modulgehäuse (1), das eine Halterung für einen eingebauten Hybridbaustein aufweist und eingesetzte elektrische Kontakte (4) enthält, und an welchem eine Steckeraufnahme (13) zur Aufnahme eines Gegensteckers (14) angeordnet ist, **dadurch gekennzeichnet, daß** die im Gehäuse gebildete Halterung für den Hybridbaustein als diesen im wesentlichen an seinem Umfang haltender Rahmen (2) ausgebildet ist, der den Hybridbaustein (3) mindestens an seiner Oberseite im wesentlichen vollständig frei zugänglich hält, und daß das Modulgehäuse eine auf den Rahmen (2) aufsetzbare, den Hybridbaustein (3) abgedichtet umschließende und am übrigen Modulgehäuse arretierbare Kappe (5) aufweist.

2. Lambda-Modul nach Anspruch 1, **dadurch gekennzeichnet, daß** der Rahmen (2) über einen halsartigen Ansatz (8) mit dem übrigen Modulgehäuse (1) verbunden ist, daß auf den halsartigen Ansatz (8) eine Ringdichtung aufgesetzt ist, und daß die Kappe (5) eine an ihrem einen Ende geschlossene Rohrform hat, deren offenes Ende mit der Dichtung (7) hermetisch dichtend zusammenwirkt.

3. Lambda-Modul nach Anspruch 1 oder 2, **dadurch gekennzeichnet, daß** die Kappe beiderseits mit Rastarmen (6) versehen ist, die beim Aufschieben der Kappe auf den Rahmen (2) mit am übrigen Modulgehäuse (1) zunächst mit Vorrasten (9) und schließlich mit Endrasten (10) zusammenwirken.

4. Lambda-Modul nach einem der Ansprüche 1 bis 3, **dadurch gekennzeichnet, daß** der im Modulgehäuse (1) gebildete Raum zur Aufnahme des Hybridbausteins (3) mit einer Gehäuseöffnung in Verbindung steht, die mittels einer Druckausgleichsmembran (11) verschlossen ist.

5. Lambda-Modul nach Anspruch 4, **dadurch gekennzeichnet, daß** die Kappe (5) eine die Druckausgleichsmembran (11) schützend überdeckende Zunge (12) aufweist.

6. Lambda-Modul nach einem der Ansprüche 1 bis 5, **dadurch gekennzeichnet, daß** der Hybridbaustein (5) von unten in die vom Rahmen (2) umschlossene Öffnung einsetzbar und mittels dort angeformter Rastnasen einrastbar ist.

7. Lambda-Modul nach einem der Ansprüche 1 bis 5, **dadurch gekennzeichnet, daß** der Hybridbaustein (3) seitwärts in den U-artigen Rahmen (2) einschiebbar ist.

8. Lambda-Modul nach einem der Ansprüche 1 bis 7 mit einem Gegenstecker, **dadurch gekennzeichnet, daß** in die Steckeraufnahme (13) ein Dichtkissen (15) eingelegt ist, das für jeden Kontakt des Gegensteckers (14) eine eigene Öffnung aufweist, und daß der Gegenstecker in seinem Inneren in rohrartige Kammern (22) zur Aufnahme jeweils eines Kontakts unterteilt ist.

9. Lambda-Modul mit einem Gegenstecker, nach Anspruch 8, **dadurch gekennzeichnet, daß** zur Verriegelung des Gegensteckers (14) mit dem Modulgehäuse (1) ein am Gegenstecker angeordneter schwenkbarer Spannbügel (17) mit bogenförmigen Kulissen (18) angeordnet ist, welch letztere mit am Modulgehäuse (1) angeordneten Zapfen (19) zusammenwirken und so geformt sind, daß sie als Endstellung eine stabile Rastposition erzeugen.

10. Lambda-Modul mit einem Gegenstecker, nach Anspruch 9, **dadurch gekennzeichnet, daß** der Spannbügel (17) Rastelemente (23) aufweist, die mit am Gegenstecker angeordneten Rastelementen in einer zurückgeschwenkten Offen-Stellung des Spannbügels (17) rastend zusammenwirken.

## Claims

1. A lambda module for motor vehicle catalytic converters, having a module housing (1) comprising a retainer for a built-in hybrid module and inserted electrical contacts (4), and at which a receptacle (13) is mounted to receive a mating plug (14), **characterised by** the retainer formed in the housing for the hybrid module essentially being formed as a frame (2) retaining said hybrid module essentially at its circumference and keeping the hybrid module (3) essentially completely freely accessible at least at its top side, and by the module housing comprising a cap (5) which can be mounted on said frame (2), said cap sealingly enclosing the hybrid module (3) and being lockable to the rest of the module housing.

2. A lambda module according to claim 1, **characterised in that** the frame (2) is connected to the rest of the module housing (1) by means of a neck-like projection (8), an annular seal is mounted on the neck-like projection (8), and said cap has a tubular shape that is closed at one end thereof, the open end thereof cooperating in a hermetically sealing fashion with said seal (7).

3. A lambda module according to claim 1 or 2, **characterised in that** the cap is equipped with latching arms (6) on both sides thereof, said latching arms cooperating first with preliminary latches (9) and eventually with final latches (10) on the rest of the module housing when the cap is being pushed onto said frame (2).

4. A lambda module according to one of claims 1 to 3, **characterised in that** the space formed within the module housing (1) for receiving the hybrid module (3) is connected to a housing opening which is closed by a pressure-equalising membrane (11).

5. A lambda module according to claim 4, **characterised in that** the cap (5) comprises a tongue (12) protectively covering the pressure-equalising membrane (11).

6. A lambda module according to one of claims 1 to 5, **characterised in that** the hybrid module (5) can be inserted from below into the opening enclosed by the frame (2) and is latchable by means of latching noses formed thereon.

7. A lambda module according to one of claims 1 to 5, **characterised in that** said hybrid module (3) can be pushed laterally into the U-shaped frame (2).

8. A lambda module according to one of claims 1 to 7 with a mating plug, **characterised in that** a sealing cushion (15) is inserted in the receptacle (13), the cushion having a separate opening for each contact of the mating plug (14), and **in that** the mating plug is divided internally into tubular chambers (22), each for receiving one contact respectively.

9. A lambda module with a mating plug according to claim 8, **characterised in that** a tightening clip (17) having arched slotted links (18) is pivotally mounted on said mating plug to lock the mating plug (14) with the module housing (1), said arched slotted links cooperating with pins (19) provided on the module housing (1) and being formed such as to produce a stable latching position as final position.

10. A lambda module with a mating plug according to claim 9, **characterised in that** the tightening clip (17) has latching elements (23) adapted to engage latching elements provided on said mating plug in an open position of the tightening clip (17) in which it is pivoted backward.

## Revendications

1. Module lambda pour catalyseurs de véhicules, comprenant un boîtier (1) de module présentant un support pour un élément hybride intégré et contenant des contacts (4) électriques intégrés et sur lequel est disposé un logement (13) de fiche pour la réception d'une contre-fiche (14), **caractérisé en ce que** le support constitué dans le boîtier pour l'élément hybride est constitué essentiellement sous forme d'un cadre (2) maintenant ledit élément hybride essentiellement sur la périphérie de celui-ci, lequel cadre maintenant l'élément hybride (3) au moins sur sa surface supérieure pour l'essentiel complètement accessible et que le boîtier de module présente un capuchon (5) susceptible d'être posé sur le cadre (2), entourant l'élément hybride (3) d'une manière étanche et encliquetable sur le reste du boîtier de module.

2. Module lambda selon la revendication 1, **caractérisé en ce que** le cadre (2) est relié au reste du boîtier (1) de module via une saillie sous forme de cou (8), qu'un joint annulaire est posé sur la saillie sous forme de cou (8) et que le capuchon (5) présente à l'une de ses extrémités une forme tubulaire fermée, dont l'extrémité ouverte coopère d'une manière hermétiquement étanche avec le joint (7).

3. Module lambda selon l'une quelconque des revendications 1 ou 2, **caractérisé en ce que** le capuchon est muni, sur les deux côtés, de bras d'encliquetage (6) qui, lors de l'enfilage du capuchon sur le cadre (2), coopèrent d'abord avec des pré-encliquetages (9) et finalement avec des encliquetages secondaires (10) sur le reste du boîtier (1) de module.

4. Module lambda selon l'une quelconque des revendications 1 à 3, **caractérisé en ce que** l'espace pour le logement de l'élément hybride (3) formé sur le boîtier (1) de module est relié à une ouverture de boîtier qui est fermée moyennant une membrane (11) de compensation de pression.

5. Module lambda selon la revendication 4, **caractérisé en ce que** le capuchon (5) présente une langue (12) recouvrant en protection une membrane (11) de compensation de pression.

6. Module lambda selon l'une quelconque des revendications 1 à 5, **caractérisé en ce que** l'élément hybride (5) peut être placé par le bas dans l'ouverture entourée par le cadre (2) et y être encliqueté moyennant des taquets d'encliquetage faisant corps avec ce dernier.

7. Module lambda selon l'une quelconque des revendications 1 à 5, **caractérisé en ce que** l'élément hybride (3) est latéralement enfichable dans le cadre (2) en U.

8. Module lambda selon l'une quelconque des revendications 1 à 7 comprenant une contre-fiche, **caractérisé en ce qu'**un coussin d'étanchéité (15) présentant une propre ouverture pour chacun des contacts de la contre-fiche (14) est posé dans le logement (13) de fiche et que l'intérieur de la contre-fiche est divisé en compartiments (22) tubulaires pour la réception d'un contact par compartiment.

9. Module lambda comprenant une contre-fiche selon la revendication 8, **caractérisé en ce que**, pour le verrouillage de la contre-fiche (14) avec le boîtier (1) de module, un étrier de tension (17) pivotable aux coulisses (18) en arc et disposé sur la contre-fiche est disposé, lesquelles coulisses coopèrent avec des tourillons (19) disposés sur le boîtier (1) de module et sont formées de sorte qu'elles génèrent une position d'encliquetage stable en position finale.

10. Module lambda comprenant une contre-fiche selon la revendication 9, **caractérisé en ce que** l'étrier de tension (17) présente des éléments d'encliquetage (23) qui coopèrent en encliquetage avec des éléments d'encliquetage disposés sur la contre-fiche dans une position ouverte pivotée en arrière de l'étrier de tension (17).
